Europäisches Patentamt

(19) European Patent Office

Office européen des brevets

(11) **EP 1 151 677 B1**

(12) **EUROPÄISCHE PATENTSCHRIFT**

(45) Veröffentlichungstag und Bekanntmachung des Hinweises auf die Patenterteilung:
**21.09.2005 Patentblatt 2005/38**

(51) Int Cl.[7]: **A23L 2/62**, A23L 2/38

(21) Anmeldenummer: **01106780.8**

(22) Anmeldetag: **17.03.2001**

(54) **Emulsionsgetränk**

Emulsion beverage

Boisson présentant des émulsions

(84) Benannte Vertragsstaaten:
**AT BE CH CY DE DK ES FI FR GB GR IE IT LI LU MC NL PT SE TR**

(30) Priorität: **17.03.2000 EP 00105679**

(43) Veröffentlichungstag der Anmeldung:
**07.11.2001 Patentblatt 2001/45**

(73) Patentinhaber: **Döhler GmbH
D-64295 Darmstadt (DE)**

(72) Erfinder:
• **Tretzel, J, Dr.
64342 Seeheim-Jugenheim (DE)**

• **Füsser, H, Dr.
64319 Pfungstadt (DE)**

(74) Vertreter: **Meyers, Hans-Wilhelm et al
Patentanwälte
von Kreisler-Selting-Werner
Postfach 10 22 41
50462 Köln (DE)**

(56) Entgegenhaltungen:
**WO-A-93/08704 WO-A-97/03576
WO-A-97/21360 US-A- 4 084 012
US-A- 4 479 971 US-A- 4 705 691
US-A- 4 835 002**

**Beschreibung**

Die vorliegende Erfindung beschreibt ein Emulsionsgetränk und ein Verfahren zur Herstellung von Emulsionsgetränken.

Getränke mit einem trüben Erscheinungsbild sind bekannt. So wird bei Erfrischungsgetränken die Trübung durch Dispergieren von Aromaöl oder einer zur Trübung geeigneten, nicht-wassermischbaren Flüssigkeit wie beispielsweise einem Speiseöl erreicht. Dieses System feinstverteilter Öltröpfchen in Wasser wird als Emulsion bezeichnet.

Typischerweise wird die Trübung durch Verwendung einer Emulsion oder eines Emulsion enthaltenen Getränkekonzentrates (Grundstoffes) bei der Herstellung des Getränkes eingebracht. Dient die Emulsion vornehmlich zum Zwecke der Trübung, wird von einer Trübungsemulsion gesprochen.

Liegt die Emulsion als monodisperses Partikelkollektiv in geeigneter Verdünnung vor, so kann die Trübung als Lichtschwächung durch Streuung analog zum Lambert-Beer-Gesetz angegeben werden:

$$\ln(T) = \ln(I/I_o) = \tau \cdot L$$

Dabei ist $\tau$ die Trübung der Emulsion, L die optisch durchstrahlte Länge der Probe, in [m], $I_o$ die Intensität des eingestrahlten Lichtes in [W/m$^2$], I die Intensität des Lichtes in [W/m$^2$] nach Durchstrahlung der Schichtdicke L und T die Transmission der Probe. Die Trübung stellt das Verhältnis aus Streuleistung der Probe pro Volumeneinheit und Intensität des Primärstrahls dar. Die Trübung wird in verdünnter Lösung bestimmt. Hierbei gilt für die Trübung:

$$\tau = \sigma_s \cdot \rho$$

$\rho$ ist die Teilchenzahldichte in [l/m$^3$] und $\sigma_s$ ist der Streulichtquerschnitt in [m$^2$], definiert als das Verhältnis der gesamten Streulichtleistung eines Teilchens zur Intensität des Primärstrahles.

Die Streulichtleistung eines Teilchens ist dabei vor allem abhängig von dem Partikeldurchmesser, dem Brechungsindex der dispersen und kontinuierlichen Phase und der Wellenlänge des eingestrahlten Lichtes.

Die spezifische Trübung $\tau_c$ ist als Quotient aus Trübung $\tau$ und Konzentration C der dispersen Phase in [kg pro m$^3$ Dispersion] definiert:

$$\tau_c = \tau/C = \frac{\sigma_s \cdot \rho}{C} = \frac{\sigma_s}{\frac{\pi}{6} \cdot d^3 \cdot \rho_d}$$

d ist der Tropfendurchmesser in [m] und $\rho_d$ die Dichte der dispersen Phase in [kg/m$^3$]

Üblicherweise nimmt für Partikel, die kleiner als 0,5 bis 1 µm (abhängig von der Messmethode: Photometer, Nephelometer, Laserdiffraktion) sind, bei Verringerung der Teilchendurchmesser bei konstanter Volumenkonzentration der dispersen Phase die Trübung oder die spezifische Trübung ab. Somit muss bei Herstellung von Trübungsemulsionen mit kleiner werdenden Öltröpfchengröße für Emulsionen unter 0,5 bis 1 µm Tröpfchengröße eine immer höhere Volumenkonzentration der dispersen Phase eingestellt werden, um in dem Endgetränk den gleichen Trübungseindruck bzw. das gleiche optische Erscheinungsbild, verglichen mit einem trüben Saftgetränk, zu erreichen.

Liegen hauptsächlich Teilchengrößen von 0,15 bis 0,3 µm vor, so weist ein Getränk mit einer Trübungsstärke, die der eines trüben Saftes entspricht, ein abweichendes optisches Erscheinungsbild verglichen mit dem eines trüben Saftes auf, bei dem hauptsächlich Teilchen mit einer Partikelgröße größer 0,3 µm vorliegen.

Eine Emulsion ist im thermodynamischen Sinne ein instabiles System, das das Bestreben hat, in den energieärmsten Zustand eines 2-Phasen-Systems zurückzukehren.

Physikalische Vorgänge, die diese Zerstörung der Emulsion beschreiben, sind Aufrahmung, Sedimentation, Flocculation und Koaleszens von Öltröpfchen. Die genannten Vorgänge können dabei zeitlich überlagert ablaufen, wobei üblicherweise die Flocculation und Koaleszens der Aufrahmung zeitlich vorausgeht.

Von ausreichender physikalischer Stabilität der Emulsion wird gesprochen, wenn innerhalb der geforderten Haltbarkeit des Lebensmittels keine Entmischung des dispersen Systems beobachtbar ist. Liegt ein System mit ungenügender physikalischer Stabilität vor, so wird bei einer - verglichen mit der wässrigen Phase - geringeren Öldichte eine Aufrahmung und Ölringbildung am Flaschenhals beobachtet. Liegt eine höhere Öldichte vor, so wird bei ungenügender physikalischer Stabilität eine Sedimentation am Boden der Flasche beobachtet.

Faktoren, die die physikalische Stabilität der Emulsion im Endgetränk bestimmen, sind die Dichtedifferenz zwischen kontinuierlicher und disperser Phase, der Phasengehalt der dispersen Phase im Endgetränk und die Partikelgröße der dispersen Phase. Je größer die Dichtedifferenz und die Partikelgröße der dispersen Phase, desto schneller erfolgt eine Aufrahmung bzw. Phasentrennung.

Üblicherweise werden mit den weltweit gesetzlich zugelassenen Beschwerungsmitteln, wie SAIB E444, Estergum E445, Dammar GUM und BVO's (brominated vegetable oils) in den zugelassenen Konzentrationen Dichteerhöhungen erreicht, die stabile Getränketrübungen auf Emulsionsbasis ermöglichen, die mit denen in Limonaden und Fruchtsaftgetränken vergleichbar sind. Dichten der dispersen Phase, die für eine ausreichende Stabilisierung benötigt werden, liegen üblicherweise zwischen 0,96 bis 1,04.

Soll eine höhere Trübung, d.h. eine mit trüben Fruchtsäften vergleichbare Trübung im Getränk durch Zusatz einer Trübungsemulsion erreicht werden, so kann üblicherweise keine ausreichende physikalische Stabilität mehr erzielt werden, da die gesetzlich festgelegten Höchstmengen keine ausreichende Dichtenivellierung ermöglichen.

Eine ausreichende Stabilisierung dieser Getränke bei Verzicht auf Beschwerungsmittel wird in der Offenlegung WO-A-97/03576 beschrieben und kann erst darin erreicht werden, wenn Partikelgrößen in der dispersen Phase vorliegen, die einen mittleren volumenbezogenen Partikeldurchmesser von 0,1 bis 0,3 μm besitzen.

Aufgabe der vorliegenden Erfindung war es, ein Verfahren bereit zu stellen, mit dem bei möglichst geringem Einsatz an nicht-wassermischbaren Flüssigkeiten eine möglichst starke Trübung in einem Emulsionsgetränk erreicht werden kann.

Gelöst wird die Aufgabe durch ein Emulsionsgetränk mit den Merkmalen des Anspruchs 1.

Das erfindungsgemäße Emulsionsgetränk weist eine wässrige und eine disperse Ölphase auf, wobei die Viskosität $\eta$ des Getränkes im Bereich von 0,001 bis 0,015 Pa·s liegt, die Dichtedifferenz $\Delta\rho = \rho_{wässrig} - \rho_{Öl}$ im Bereich von 0,12 bis 0,025 kg/l liegt und der Gehalt G an Ölphase im Getränk im Bereich von 0,35 bis 3 g/kg bevorzugt von 0,4 bis 3 g/kg und besonders bevorzugt bei 0,55 bis 3 g/kg des Emulsionsgetränksliegt, und der d97-Wert im Bereich von 0,75 x Y bis Y liegt, wobei

$$\ln(Y) = 1{,}457 + 1{,}524 \cdot 10^{1} \cdot \eta - 8{,}385 \cdot 10^{-1} \cdot G - 1{,}880 \cdot 10^{1} \cdot \Delta\rho - 5{,}025 \cdot 10^{-1} \cdot \eta \cdot G - 4{,}520 \cdot 10^{0} \cdot \Delta\rho \cdot G$$

$$+ 8{,}66 \cdot 10^{2} \cdot \Delta\rho \cdot \eta + 2{,}050 \cdot 10^{2} \cdot \eta^{2} + 3{,}330 \cdot 10^{-1} \cdot G^{2} + 8{,}300 \cdot 10^{0} \cdot \Delta\rho^{2}$$

$$+ 8{,}254 \cdot 10^{1} \cdot G \cdot \Delta\rho^{2} - 4{,}426 \cdot 10^{-2} \cdot G^{3} + 4{,}070 \cdot 10^{2} \cdot \Delta\rho^{3} - 9{,}937 \cdot 10^{2} \cdot \eta^{3}$$

$$+ 2{,}730 \cdot 10^{4} \cdot \eta \cdot \Delta\rho^{3} - 4{,}420 \cdot 10^{2} \cdot G \cdot \Delta\rho^{3} + 6{,}058 \cdot 10^{4} \cdot \Delta\rho \cdot \eta^{3} - 5{,}821 \cdot 10^{5} \cdot \eta^{2} \cdot \Delta\rho^{2}$$

Der d97-Wert bezeichnet den Tropfendurchmesser in μm, bei dem 97% des Volumens der im Getränk enthaltenen dispersen Phase der Emulsion einen kleineren Tropfendurchmesser besitzen. Ölphase ist dabei jede lebensmittelrechtlich zugelassene, nicht-wasserlösliche Flüssigkeit.

Überraschenderweise wurde nun gefunden, dass es möglich ist, stabile Emulsionsgetränke herzustellen, die eine optimierte maximale spezifische Trübung besitzen und somit im Gegensatz zu WO-A-97/03576 bei gleicher Dosage an disperser Phase im Getränk eine wesentlich höhere Trübung aufweisen, und trotzdem hinreichend stabil sind. Somit wird zur Einstellung des gewünschten Trübungseindruckes eine erheblich geringere Ölmenge benötigt oder der gewünschte Trübungseindruck durch das Vorhandensein von mittleren Tröpfendurchmessern über 0,3 μm erst ermöglicht wird.

Die Aufrahmstabilität der Emulsion wird erreicht, indem in Abhängigkeit von dem Gehalt an disperser Ölphase im Getränk, der Viskosität des Getränkes und der Dichtedifferenz eine bestimmte Partikelgröße und Partikelverteilung in der Emulsion verwendet werden.

Das Emulsionsgetränk besitzt dabei bevorzugt Emulsion mit eine spezifische Trübung von mehr als 180 kg/g·m. Die Emulsion beinhaltet ein Öl sowie möglicherweise Stabilisatoren, Emulgatoren und/oder Beschwerungsmittel. Die Dichte der Ölphase liegt bevorzugt zwischen 0,915 bis 0,975 g/ml, bevorzugt zwischen 0,93 bis 0,975 g/ml. Dichtedifferenz $\Delta\rho$ liegt bevorzugt zwischen 0,25 und 0,12 kg/l.

Das Emulsionsgetränk enthält gegebenenfalls zusätzlich einen oder mehrere der folgenden üblichen Zusätze, wie Fruchtbestandteile, im Lebensmittelbereich zugelassene Genusssäuren und anorganische Säuren, Antioxidantien, Süßungsmittel, Aromen, Farbstoffe, Verdickungsmittel sogenannte "funktionelle" Zutaten und Konservierungsstoffe.

Als Fruchtbestandteile werden hier vor allem Fruchtaromen, Fruchtsäfte, Fruchtpürees und Fruchtsaftkonzentrate verstanden.

Fruchtsäfte bzw. Fruchtsaftkonzentrate, die verwendet werden können, sind solche auf Basis von Zitrusfrüchten, wie Orange, Zitrone, Grapefruit und Mandarine und anderen Früchten, wie Apfel, Birne, Aprikose und Ananas.

Weiterhin können Fruchtsäfte und Fruchtsaftkonzentrate aus Beerenobst, wie Brombeere, Stachelbeere, Johannisbeere, Heidelbeere, Erdbeere und Himbeere verwendet werden.

Weiterhin können Fruchtsäfte und Fruchtsaftkonzentrate aus exotischen Früchten, wie beispielsweise Guave, Papaya, Maracuja, Mango und Banane verwendet werden.

Erfindungsgemäß werden zwischen 0,001% bis 80% der bezeichneten Fruchtbestandteile im Getränk eingesetzt. Bevorzugt werden Fruchtsaftkonzentrate eingesetzt.

Weiterhin kann das Getränk Süßungsmittel enthalten. Üblicherweise werden Zucker, Süßstoffe, Zuckeraustauschstoffe und Süßungsmittelzusammensetzungen, sowie Mischungen daraus eingesetzt. Verwendbare Süßstoffe sind Acesulfam-K, Aspartam, Cyclamat, Neohesperidindihydrochalcon und Saccharin. Pflanzliche Süßstoffe können ebenfalls verwendet werden, wie beispielsweise Glycyrrhicin und Thaumatin.

Geeignete Zuckeraustauschstoffe sind Fructose und Zuckeralkohole wie Isomal (E953), Lactitol (E966),. Maltitol, Manitol (E421), Sorbitol (E420), Xylitol (E967) sowie Gemische daraus. Weiterhin können als Süßungsmittel Mischungen aus synthetischem Süßstoff und entaromatisierten oder nicht entaromatisierten konzentrierten Fruchtzubereitungen verwendet werden.

Die Süßungsmittel werden dem erfindungsgemäßen Getränk in einer solchen Menge zugegeben, dass die erhaltene Süßkraft einem Zusatz bis zu 160 g/l Saccharose entspricht. Bevorzugt werden 80 bis 110 g/l Saccharose.

Weiterhin kann das erfindungsgemäße Getränk Verdickungsmittel enthalten. Geeignete Verdickungsmittel sind Carboxymethylcellulose, Xanthan, Johannisbrotkernmehl, Gellan, Guarkethmehl, Carragen, Alginsäure, Alginate, Pektin sowie Mischungen daraus. Werden Verdickungsmittel angewendet, so liegt der Gehalt an bezeichneten Verdickungsmitteln im Getränk dabei zwischen 0,0025 bis 0,3%.

Das erfindungsgemäße Getränk kann weiterhin sogenannte "funktionelle" Zutaten enthalten, wie beispielsweise Vitamine, Mineralstoffe, Kräuterextrakte, Ballaststoffe, prebiotische Zutaten, Coffein und Alkohol.

Es kann mit Lebensmittelfarbstoffen und/oder färbenden Lebensmittel eingefärbt werden. Erfindungsgemäß kann das Getränk im Lebensmittelbereich zugelassene Konservierungsstoffe enthalten. Geeignete Konservierungsstoffe sind beispielsweise, Sorbinsäure, Benzoesäure und deren Alkalisalze.

Das Konservierungsmittel wird üblicherweise in einer Konzentration von 0,01% bis 0,2% im Getränk angewendet.

Das erfindungsgemäße Getränk kann geeignete natürliche und synthetische Antioxidantien besitzen. Geeignete natürliche Antioxidantien sind beispielsweise Tocopherole, L-Ascorbinsäure, ihre Fettsäureester, wie L-Ascorbylpalmitat, Gallussäureester und Flavonoide. Geeignete synthetische Antioxidantien sind beispielsweise tert.-Butylhydroxyanisol und tert.-Butylhydrochinon.

Die vorliegende Erfindung betrifft auch die Herstellung von Emulsionsgetränken aus einer vorbereiteten Trübungsemulsion. Das dabei hergestellte Getränkeprodukt beinhaltet dabei die Trübungsemulsion und gegebenenfalls Verdickungsmittel, Stabilisatoren, Aromen, Frucht und/oder Fruchtsaftkonzentrate. Das hergestellte Getränk kann carbonisiert oder nicht carbonisiert vorliegen. Es kann durch Kühllagerung oder thermische Behandlung haltbar gemacht werden.

Die Trübungsemulsion wird insbesondere zur Trübung oder zur Trübung und Aromatisierung des Getränkeproduktes eingesetzt. Die Emulsion ist eine Öl-in-Wasser-Emulsion und besitzt bevorzugt eine Dichte in der dispersen Phase von 0,915 bis 0,975 g/ml, noch mehr bevorzugt zwischen 0,93 bis 0,975. Die Dichte der dispersen Phase wird durch eine entsprechende Wahl der Komponenten der Ölphase eingestellt. Wichtig ist, dass die Dichtedifferenz zwischen der dispersen Phase und der wässrigen Phase im herzustellenden Emulsionsgetränk im Bereich von 0,12 bis 0,025 kg/l liegt.

Als nicht-wasserlösliche Flüssigkeit werden beispielsweise Öle und Fette pflanzlichen oder tierischen Ursprungs wie pflanzliche Speiseöle und Speisefette, Terpene und Aromaöle eingesetzt.

In einigen Anwendungsfällen, wenn die Dichtedifferenz zwischen wässriger und Ölphase zu groß ist, wird ein Beschwerungsmittel zusätzlich verwendet. Als Beschwerungsmittel werden beispielsweise SAIB E444, Estergum E445, Dammar GUM und BVO's (brominated vegetable oils) oder Kombinationen eingesetzt.

Die Summe aller nicht wasserlöslichen Bestandteile wird als disperse Phase bezeichnet. Sie liegt zwischen 2 bis 20 Gewichtsprozenten, vorzugsweise zwischen 6 bis 12 Gewichtsprozenten in der Trübungsemulsion vor.

Als die Emulsion stabilisierende Substanz können allgemein für Lebensmittel zugelassene Hydrokolloide, wie Gummi arabicum, Xanthan, Johannisbrotkernmehl, Pektin, und anionische Polymere aus Stärke oder Cellulose, wie Stärkenatriumoctenylsuccinat oder Carboxymethylcellulose eingesetzt werden.

Das emulgierende Hydrokolloid wird beispielsweise in einem Gewichtsverhältnis von 0,2:1 bis 4:1 auf die disperse Phase eingesetzt. Bevorzugt liegt ein Gewichtsverhältnis von 0,3:1 bis 1:1 vor.

Der mittlere volumenbezogene Partikeldurchmesser und die Partikelverteilung der Emulsion sind für die spezifische Trübung der Emulsion und für die Aufrahmstabilität des Getränkes entscheidend.

Liegen mittlere volumenbezogene Partikeldurchmesser über 0,4 µm vor, so lassen sich in der Regel keine aufrahmstabilen Getränke aus der Emulsion produzieren. Werden Emulsionen mit mittleren volumenbezogene Partikeldurchmesser kleiner 0,33 µm verwendet, so kommt es aufgrund der geringeren spezifischen Trübung erst bei wesentlich höheren Mengen an disperser Phase, verglichen mit der beanspruchten Emulsion, zu einer sichtdichten Trübung.

Getränkeemulsionen mit der hier genannten Partikelverteilung lassen sich mit jeder bekannten, geeigneten Methode, wie der Hochdruckhomogenisation, Mikrofluidisation oder Emulgierung über Membranen herstellen.

Wird ein Hochdruckhomogenisator verwendet, so wird ein zweistufiger Homogenisator bevorzugt; bei dem ein definiertes Druckniveau im Auslauf der Homogenisationsdüse eingestellt werden kann. Der verwendete Hauptdruck, das heißt der Druck am Einlauf in die Homogenisationsdüse, liegt bei der Herstellung der hier beanspruchten Trübungsemulsion zwischen 100 bis 500 bar, vorzugsweise zwischen 140 bis 260 bar.

Das Druckniveau im Auslauf wird auf 1/3 bis 1/15 des Hauptdruckes eingestellt, vorzugsweise auf 1/5 bis 1/10.

Die Temperatur bei der Homogenisation liegt unter 90°C, vorzugsweise unter 40°C.

Zur Herstellung des erfindungsgemäßen Getränkes können die konventionell verwendeten Technologien zur Herstellung des fertigen Getränkes verwendet werden. Die Methoden, die zur Herstellung von Getränken dienen, werden beispielsweise in Woodroof und Phillips, Beverages: Carbonated & Noncarbonated, AVI Publishing Co. (1981) und in Südzucker AG, Mannheim/Ochsenfurt, Handbuch: Erfrischungsgetränke (1998) beschrieben.

Üblicherweise wird bei der Herstellung von Getränken ein Grundstoff verwendet. Er enthält normalerweise alle für das Getränk wichtigen Bestandteile außer Wasser, Zucker und gegebenenfalls $CO_2$. Der Grundstoff stellt somit ein Konzentrat des Getränkes dar, der alle wesentlichen, das Getränk charakterisierenden Inhaltsstoffe enthält.

Dabei kann das Getränk aus zwei oder mehreren Grundstoffkomponenten ausgemischt werden. Diese werden als zwei oder mehrteilige Grundstoffe bezeichnet.

Eine andere Getränkeherstellungweise ist die Herstellung eines Sirupansatzes und dessen Ausmischung zum fertigen Getränk. Im Unterschied zum Grundstoff müssen hierbei nur noch Wasser und $CO_2$ zugesetzt werden.

Wird erfindungsgemäß das Getränk aus einem ein- oder mehrteiligen Grundstoff oder aus einem Sirupansatz hergestellt, so können diese Konzentrate gegebenenfalls pasteurisiert, auf entsprechende Gebinde gefüllt und gelagert werden.

Das hergestellte Getränkeprodukt ist für mindestens vier Wochen aufrahmstabil. Aufrahmstabil bedeutet hierbei, dass im Flaschenhals ein Ring mit einer maximalen Ringdicke von 0,5 mm entsteht. Die Lagerung erfolgt bei einer konstanten Temperatur von 20 ± 1,5°C.

**Beispiele**

Methode zur Bestimmung der Partikelverteilung der Trübungsemulsion

Der mittlere Partikeldurchmesser und die Partikelverteilung wird mit dem Mastersizer 2000 der Firma Malvern Instruments Ltd. bestimmt.

Zur Bestimmung wird die Probe der Trübungsemulsion in der Messanordnung auf eine Abschattung von 10 bis 20% eingestellt, für mindestens 10s mit Ultraschall behandelt und gemessen. Als Messzelle wird die Zelle Hydro 2000 MU verwendet. Die Pumpenintensität beträgt 2200 bis 2500. Die Aussteuerung des Ultraschalls beträgt 7 bis 10. Zur Berechnung wird das allgemeine Modell verwendet, wobei als optische Konstanten der Refraktionsindex der dispersen Phase mit 1,449 (Emulsionstropfen) und der Refraktionsindex der kontinuierlichen Phase mit 1,330 (Wasser) festgelegt werden.

Die Absorption der Probe wird mit 0,01 festgelegt.

Methode zur Bestimmung der spezifischen Trübung der Trübungsemulsion

Eine Probe der Emulsion wird je nach Anteil an disperser Phase auf 1:200 bis 1:400 verdünnt.

Die Extinktion der verdünnten Emulsion wird in einer 1 cm Plastikküvette im Spectrophotometer der Bauart Perkin-Elmer Lambda2 UV/VIS bei einer Wellenlänge von 633 nm bestimmt.

Die Trübung τ wird aus der Extinktion E hier wie folgt berechnet:

$$E = \tau \cdot L$$

L ist die optisch durchstrahlte Länge der Probe.

$$\text{Trübung } [m^{-1}] = \text{Extinktion} * 100$$

Nach Berechnung der Trübung erfolgt die Berechnung der spezifischen Trübung wie folgt:

$$\tau_c = \tau/C$$

Die spezifische Trübung $\tau_c$ ist als Quotient aus Trübung $\tau$ und Konzentration C der dispersen Phase definiert. Die Konzentration C wird in kg disperse Phase pro m$^3$ Dispersion angegeben.

Ermittlung der Viskosität $\eta$ über die Fließ- und Viskositätskurve

Gerät: Firma Bohlin Instruments, CVO 120 HR
Messsystem CP 2° / 60 mm
Temperatur 20°C
Schubspannungssweep in mind. 15 Stufen: von 0,001 Pa bis 0,1 Pa
Verzögerungszeit: mindestens 300 s
Max. Integrationszeit: mindestens 120 s

Ramp.-Richtung: Auf Bereich: LOG

Zur Abschätzung der Stabilität der Getränke wird die Viskosität herangezogen, bei der erstmals eine "Stationärbedingung" 0,95 < dln(J(t)/dLn(t) < 1,05 bei möglichst kleiner Scherrate vorliegt. J(t) [m$^2$/N] ist die Schubnachgiebigkeit oder Komplianz zum Messzeitpunkt t [s]. Die ermittelte Viskosität wird in Gleichung 2 zur Berechnung der Prognose verwendet.
Beispielhafte Zusammensetzungen der Rezeptur der Emulsionen, die in das erfindungsgemäße Getränk eingebracht werden sind in Tabelle 1a und 1b dargestellt. Sie werden mit "A" bis "N" bezeichnet.
Dabei repräsentiert "Vergleichsemulsion I" in Tab. 1a die Rezeptur und in Tab. 2 die Emulsionsherstellungs- und Ausmischvariante entsprechend wie in WO 97/03576 beschrieben.

**Emulsionsrezeptur**

| Emulsionsrezepturen | | | | | | |
|---|---|---|---|---|---|---|
| Komponente (%) | A | B | C | D | E | Vergleichsemulsion I |
| Öl | 9 | 13 | 6,5 | 8,37 | 6,5 | 4,5 |
| Beschwerungsmittel | - | - | 2,5/ SAIB | 0,63/ Glycerinester aus Wurzelharz | 1,3/ SAIB | - |
| Gummi arabicum | 5,3 | 5,3 | 6,2 | 5,5 | 6,2 | 5,2 |
| Säuerungsmittel | 0,24 | 0,3 | 0,3 | 0,3 | 0,3 | 0,24 |
| Konservierungsmittel | 0,12 | 0,12 | 0,12 | 0,12 | 0,12 | 0,12 |
| Wasser | 85,19 | 81,03 | 84,20 | 84,93 | 85,43 | 89,79 |
| Farbstoff | 0,05 | 0,05 | 0,05 | 0,05 | 0,05 | 0,05 |
| Vitamine | 0,1 | 0,2 | 0,13 | 0,1 | 0,1 | 0,1 |

Tab.1a

| Emulsionsrezepturen | | | | | | | | | |
|---|---|---|---|---|---|---|---|---|---|
| Komponente (%) | F | G | H | I | J | K | L | M | N |
| Öl | 8,9 | 7,85 | 6,85 | 5,85 | 4,85 | 10 | 10 | 10 | 10 |
| Beschwerungsmittel | 1,10/ SAIB | 2,15/ SAIB | 3,15/ SAIB | 4,15/ SAIB | 5,15/ SAIB | - | - | - | - |
| Gummiarabicum | 9 | 9 | 8,5 | 8 | 8 | 8 | 9 | 8,5 | 10 |
| Säuerungsmittel | 0,3 | 0,3 | 0,3 | 0,3 | 0,3 | 0,3 | 0,3 | 0,3 | 0,3 |
| Konservierungsmittel | 0,12 | 0,12 | 0,12 | 0,12 | 0,12 | 0,12 | 0,12 | 0,12 | 0,12 |
| Wasser | 80,58 | 80,58 | 81,08 | 81,58 | 81,58 | 81,58 | 80,58 | 81,08 | 79,58 |
| Farbstoff | - | - | - | - | - | - | - | - | - |
| Vitamine | - | - | - | - | - | - | - | - | - |

Tab. 1b

EP 1 151 677 B1

**Emulsionsherstellung und Getränkeaussmischung**

Die Herstellung der Emulsionen erfolgt, indem gegebenenfalls Vitamine, Farbstoffe und Konservierungsmittel in dem Wasser gelöst und dispergiert werden. Lediglich dispergiert werden zu wasserdispergierbaren Vorprodukten formulierte öllösliche Farbstoffe und Vitamine.
Nach Zugabe des Säuerungsmittels wird das Öl durch ein Rührer, beispielsweise Rotor-Stator-System, mit einer entsprechenden Umfangsgeschwindigkeit voremulgiert. Danach erfolgt eine Hochdruckhomogenisation.
Unter Verwendung der in Tab. 1a und 1b angegebenen Emulsionsrezepturen wird die Emulsion hergestellt und unter Verwendung eines zweiteiligen Grundstoffes entsprechend der Tabelle 2 bis 9 ausgemischt. Die Emulsion besitzt nach der Emulsionsherstellung hinsichtlich des D97-Wertes, der Aufrahmstabilität, der Sichtdichtigkeit und der spezifischen Trübung die in Tabelle 2 bis 9 genannten Eigenschaften.
Wie in Tab. 2 bis 4 dargestellt , ist das erfindungsgemäße Getränk bei einer Verdünnung auf 500 ppm Öl bei einer Schichtdicke von 10 mm visuell sichtdicht und besitzt eine Aufrahmstabilität von 4 Wochen. Wie in Tab. 2 bis 4 gezeigt, besitzt die erfindungsgemäß verwendete Trübungsemulsion mindestens eine spezifische Trübung von 150 kg/(g·m) gegenüber 131 kg/(g·m) der Vergleichsemulsion I mit erheblich kleineren Teilchen.
Wird durch Erhöhung des Gehaltes G an Ölphase im Getränk der D97-Wert > Y, so zeigt der Vergleich von Tab. 3 mit Tab. 5 resp. Tab. 4 mit Tab. 6, daß bei gleicher Emulsionsrezeptur und sonst gleicher Ausmischvariante - die Eigenschaften sind bis auf G identisch- keine Aufrahmstabilität vorliegt. Beispielsweise ist die Emulsionsherstellungs- und Ausmischvariante 30 gegenüber 12 und die die Emulsionsherstellungs- und Ausmischvariante 36 gegenüber 20 nicht aufrahmstabil.
Werden durch entsprechendes Homogenisieren bei höheren Drücken kleinere Teilchen in der Emulsion erzeugt, so daß der D97-Wert < 0,75·Y ist, liegen bei gleicher Emulsionsrezeptur und sonst gleicher Emulsionsherstellungs- und Ausmischvariante aufrahmstabile Emulsionen vor. Die spezifische Trübung ist aber gegenüber dem erfindungsgemäßen Getränk erheblich niedriger. Dies zeigt beispielsweise der Vergleich der spezifischen Trübung von Emulsionsherstellungs- und Ausmischvariante 31 mit 12 und Emulsionsherstellungs- und Ausmischvariante 37 mit 20. Es liegen bei den Varianten 31 und 37 unwirtschaftlich kleine Trübungen vor.

Tab. 2

| Emulsionsrezeptur | A | B | C | D | E | Vergleichs-emuls. I |
|---|---|---|---|---|---|---|
| Emulsionsherstell ungs- und Ausmischungvariante | 1 | 2 | 3 | 4 | 5 | 6 |
| **Komponente %** | | | | | | |
| **Grundstoff I** Emulsion | 2,01 | 0,39 | 1,17 | 1,5 | 2,3 | 2,01 |
| **Grundstoff II** Aroma-Saft-Konzentrat | 1,34 | 1,4 | 1,4 | 1,4 | 1,4 | 1,34 |
| Süßung | 9,7 | 9,7 | 9,7 | 9,7 | 9,7 | 9,7 |
| Säuerung | 0,57 | 0,6 | 0,6 | 0,58 | 0,6 | 0,57 |
| Vitamine | 0,06 | 0,05 | - | 0,1 | 0,05 | 0,05 |
| Verdickungsmittel | 0,08 | - | 0,025 | 0,05 | 0,05 | 0,08 |
| Konservierungsmi ttel | 0,025 | - | 0,025 | 0,025 | 0,025 | 0,025 |
| Wasser | 86,215 | 87,86 | 87,08 | 86,645 | 85,875 | 86,225 |
| **Eigenschaften** | | | | | | |
| Viskosität des Getränkes [Ns/m$^2$] | 0,0058 | 0,0012 | 0,0021 | 0,0035 | 0,0035 | 0,0058 |
| Öldichte [kg/l] | 0,927 | 0,95 | 0,97 | 0,95 | 0,96 | 0,927 |
| Dichtedifferenz [kg/l] | 0,111 | 0,0881 | 0,0681 | 0,0881 | 0,0781 | 0,111 |
| Gehalt G an Ölphase im Getränk [g/kg] | 1,809 | 0,507 | 1,05 | 1,35 | 1,79 | 0,905 |
| Y [μm] | 0,821 | 0,899 | 0,881 | 0,786 | 0,763 | 1,058 |
| D97-Wert [μm] | 0,71 | 0,82 | 0,86 | 0,75 | 0,72 | 0,41 |

Tab. 2   (fortgesetzt)

| Emulsionsrezeptur | A | B | C | D | E | Vergleichs-emuls. I |
|---|---|---|---|---|---|---|
| **Eigenschaften** | | | | | | |
| Sichtdicht bei 10 mm Schichtdicke 500 ppm Öl | Ja | Ja | Ja | Ja | Ja | Nein |
| Spezifische Trübung $^{kg}/_{g \cdot m}$ | 203 | 214 | 221 | 199 | 201 | 131 |
| 4 Wochen aufrahmstabil bei Raumtemperatur | Ja | Ja | Ja | Ja | Ja | Ja |

Tab. 3

| **Getränkeherstellung mit Beschwerungsmittel** | | | | | | | | | |
|---|---|---|---|---|---|---|---|---|---|
| Emulsionsrezeptur | G | H | I | J | F | G | H | I | J |
| Emulsionsherstellungs- und Ausmischungvariante | 7 | 8 | 9 | 10 | 11 | 12 | 13 | 14 | 15 |
| **Komponente %** | | | | | | | | | |
| **Grundstoff I** Emulsion | 1,39 | 0,95 | 0,72 | 0,59 | 2,72 | 1,39 | 0,95 | 0,72 | 0,59 |
| **Grundstoff II** Aroma-Saft-Konzentrat | 1,4 | 1,4 | 1,4 | 1,4 | 1,34 | 1,34 | 1,34 | 1,34 | 1,34 |
| Süßung | 9,7 | 9,7 | 9,7 | 9,7 | 9,7 | 9,7 | 9,7 | 9,7 | 9,7 |
| Säuerung | 0,6 | 0,6 | 0,58 | 0,6 | 0,57 | 0,57 | 0,57 | 0,57 | 0,57 |
| Vitamine | - | - | - | - | - | - | - | - | - |
| Verdickungsmittel | - | - | - | - | 0,16 | 0,15 | 0,16 | 0,15 | 0,14 |
| Konservierungsmittel | - | - | - | - | - | - | - | - | - |
| Wasser | 86,91 | 87,35 | 87,6 | 87,71 | 85,51 | 85,67 | 87,28 | 87,52 | 87,66 |
| **Eigenschaften** | | | | | | | | | |
| Viskosität des Getränkes [Ns/m$^2$] | 0,0012 | 0,0012 | 0,0012 | 0,0012 | 0,011 | 0,010 | 0,010 | 0,010 | 0,011 |
| Öldichte r [kg/l] | 0,96 | 0,98 | 1,0 | 1,02 | 0,94 | 0,96 | 0,98 | 1,0 | 1,02 |
| Dichtedifferenz Dr [kg/l] | 0,08 | 0,06 | 0,04 | 0,02 | 0,1 | 0,08 | 0,06 | 0,04 | 0,02 |
| Gehalt G an Ölphase im Getränk [g/kg] | 1,39 | 0,95 | 0,72 | 0,59 | 2,72 | 1,39 | 0,95 | 0,72 | 0,59 |
| Y [µm] | 0,65 | 0,9 | 1,3 | 2,0 | 0,91 | 1,15 | 1,45 | 2,0 | 2,7 |
| D97-Wert [µm] | 0,62 | 0,87 | 1,25 | 1,9 | 0,87 | 1,1 | 1,3 | 1,85 | 2,55 |
| Sichtdicht bei 10 mm Schichtdicke 500 ppm Öl | Ja | Ja | Ja | Ja | Ja | Ja | Ja | Ja | Ja |
| *Spezifische Trübung* $^{kg}/_{g \cdot m}$ | *172* | *233* | *294* | *370* | *227* | *270* | *303* | *384* | *454* |
| 4 Wochen aufrahmstabil bei Raumtemp. | Ja | Ja | Ja | Ja | Ja | Ja | Ja | Ja | Ja |

## Getränkeherstellung ohne Beschwerungsmittel mit spez. Trübung von mindestens 150 kg/gxm

| Emulsionsrezeptur | K | K | K | L | M | K | L | M | N | M |
|---|---|---|---|---|---|---|---|---|---|---|
| Emulsionsherstellungs- und Ausmischungvariante | 16 | 17 | 18 | 19 | 20 | 21 | 22 | 23 | 24 | 25 |
| **Komponente %** | | | | | | | | | | |
| **Grundstoff I** Emulsion | 0,5 | 0,5 | 0,5 | 1 | 1 | 1 | 2 | 2 | 3 | 3 |
| **Grundstoff II** Aroma-Saft-Konzentrat | 1,34 | 1,4 | 1,4 | 1,4 | 1,4 | 1,34 | 1,34 | 1,34 | 1,34 | 1,34 |
| Süßung | 9,7 | 9,7 | 9,7 | 9,7 | 9,7 | 9,7 | 9,7 | 9,7 | 9,7 | 9,7 |
| Säuerung | 0,57 | 0,6 | 0,6 | 0,58 | 0,6 | 0,57 | 0,57 | 0,57 | 0,57 | 0,57 |
| Vitamine | - | - | - | - | - | - | - | - | - | - |
| Verdickungsmittel | - | 0,06 | 0,15 | - | 0,06 | 0,15 | 0,06 | 0,15 | 0,06 | 0,15 |
| Konservierung | - | - | - | - | - | - | - | - | - | - |
| Wasser | 87,89 | 87,74 | 87,65 | 87,32 | 87,24 | 87,24 | 86,33 | 86,24 | 85,33 | 85,24 |
| **Eigenschaften** | | | | | | | | | | |
| Viskosität des Getränkes [Ns/m²] | 0,001 | 0,004 | 0,01 | 0,001 | 0,004 | 0,01 | 0,004 | 0,01 | 0,004 | 0,01 |
| Öldichte r [kg/l] | 0,92 | 0,92 | 0,92 | 0,92 | 0,92 | 0,92 | 0,92 | 0,92 | 0,92 | 0,92 |
| Dichtedifferenz Dr [kg/l] | 0,12 | 0,12 | 0,12 | 0,12 | 0,12 | 0,12 | 0,12 | 0,12 | 0,12 | 0,12 |
| Gehalt G an Ölphase im Getränk [g/kg] | 0,5 | 0,5 | 0,5 | 1 | 1 | 1 | 2 | 2 | 3 | 3 |
| Y [µm] | 0,8 | 1,2 | 1,6 | 0,61 | 0,9 | 1,2 | 0,68 | 0,93 | 0,59 | 0,81 |
| D97-Wert [µm] | 0,75 | 1,1 | 1,5 | 0,55 | 0,85 | 1,15 | 0,65 | 0,9 | 0,55 | 0,75 |
| Sichtdicht bei 10 mm Schichtdicke 500 ppm Öl | Ja | Ja | Ja | Ja | Ja | Ja | Ja | Ja | Ja | Ja |
| Spezifische Trübung $kg/g \cdot m$ | 210 | 270 | 320 | 155 | 225 | 275 | 173 | 230 | 150 | 207 |
| 4 Wochen aufrahmstabil bei Raumtemperatur | Ja | Ja | Ja | Ja | Ja | Ja | Ja | Ja | Ja | Ja |

**Tab. 4**

EP 1 151 677 B1

Tab. 5

| n.st. bedeutet nicht aufrahmstabil. kl. Tr. bedeutet unwirtschaftlich kleine Truebung. | | | | | | | | |
|---|---|---|---|---|---|---|---|---|
| **Getränkeherstellung mit Beschwerungsmittel nicht stabil oder unwirtschaftlich kleine Truebung** | | | | | | | | |
| **Emulsionsrezeptur** | H n. st. | H kl. Tr. | J n. st. | J kl. Tr. | G n. st. | G kl. Tr. | I n. st. | I kl. Tr. |
| Emulsionsherst ellungs- und Ausmischungva riante | 26 | 27 | 28 | 29 | 30 | 31 | 32 | 33 |
| **Komponente %** | | | | | | | | |
| **Grundstoff I** Emulsion | 1,25 | 0,95 | 0,75 | 0,60 | 1,75 | 1,4 | 1,1 | 0,72 |
| **Grundstoff II** Aroma-Saft-Konzentrat | 1,4 | 1,4 | 1,4 | 1,34 | 1,34 | 1,34 | 1,34 | 1,34 |
| Süßung | 9,7 | 9,7 | 9,7 | 9,7 | 9,7 | 9,7 | 9,7 | 9,7 |
| Säuerung | 0,6 | 0,58 | 0,6 | 0,57 | 0,57 | 0,57 | 0,57 | 0,57 |
| Vitamine | - | - | - | - | - | - | - | - |
| Verdickungsmit tel | - | - | - | - | 0,15 | 0,15 | 0,15 | 0,15 |
| Konservierungs mittel | - | - | - | - | - | - | - | - |
| Wasser | 87,05 | 87,37 | 87,55 | 87,79 | 86,49 | 86,84 | 87,14 | 87,52 |
| **Eigenschaften** | | | | | | | | |
| Viskosität des Getränkes [Ns/m$^2$] | 0,0012 | 0,0012 | 0,0012 | 0,0012 | 0,010 | 0,010 | 0,010 | 0,011 |
| Öldichte [kg/l] | 0,98 | 0,98 | 1,02 | 1,02 | 0,96 | 0,96 | 1,0 | 1,0 |
| Dichtedifferenz [kg/l] | 0,06 | 0,06 | 0,02 | 0,02 | 0,08 | 0,08 | 0,04 | 0,04 |
| Gehalt G an Ölphase im Getränk [g/kg] | 1,25 | 0,95 | 0,75 | 0,60 | 1,75 | 1,4 | 1,1 | 0,72 |
| Y [µm] | 0,8 | 0,9 | 1,8 | 2,0 | 1,0 | 1,15 | 1,7 | 2,0 |
| D97-Wert [µm] | 0,87 | 0,57 | 1,9 | 1,0 | 1,1 | 0,75 | 1,85 | 1,2 |
| Sichtdicht bei 10 mm Schichtdicke 500 ppm Öl | Ja | Nein | Ja | Ja | Ja | Ja | Ja | Ja |
| *Spezifische Trübung* $kg/_{g \cdot m}$ | *228* | *149* | *367* | *283* | *269* | *195* | *382* | *294* |
| 4 Wochen aufrahmstabil bei Raumtemp. | Nein | Ja | Nein | Ja | Nein | Ja | Nein | Ja |

**Getränkeherstellung ohne Beschwerungsmittel mit spez. Trübung von mindestens 150 kg/gxm nicht stabil oder unwirtschaftlich kleine Truebung**

| Emulsionsrezeptur | L n. st | L kl. Tr. | M n. st | M kl. Tr. | K n. st | K kl. Tr. | L n. st | L kl. Tr. | M n. st | M kl. Tr. |
|---|---|---|---|---|---|---|---|---|---|---|
| Emulsionsherstellungs- und Ausmischungvariante | 34 | 35 | 36 | 37 | 38 | 39 | 40 | 41 | 42 | 43 |
| **Komponente %** | | | | | | | | | | |
| **Grundstoff I** Emulsion | 1 | 1 | 1 | 1 | 1 | 1 | 2 | 2 | 2 | 2 |
| **Grundstoff II** Aroma-Saft-Konzentrat | 1,4 | 1,4 | 1,4 | 1,4 | 1,34 | 1,34 | 1,34 | 1,34 | 1,34 | 1,34 |
| Süßung | 9,7 | 9,7 | 9,7 | 9,7 | 9,7 | 9,7 | 9,7 | 9,7 | 9,7 | 9,7 |
| Säuerung | 0,58 | 0,58 | 0,6 | 0,6 | 0,57 | 0,57 | 0,57 | 0,57 | 0,57 | 0,57 |
| Vitamine | - | - | - | - | - | - | - | - | - | - |
| Verdickungsmittel | - | - | 0,065 | 0,07 | 0,2 | 0,15 | 0,06 | 0,055 | 0,17 | 0,16 |
| Konservierung | - | - | - | - | - | - | - | - | - | - |
| Wasser | 87,32 | 87,32 | 87,235 | 87,23 | 87,19 | 87,24 | 86,33 | 86,335 | 86,22 | 86,23 |
| **Eigenschaften** | | | | | | | | | | |
| Viskosität des Getränkes [Ns/m$^2$] | 0,001 | 0,001 | 0,004 | 0,004 | 0,01 | 0,01 | 0,004 | 0,004 | 0,01 | 0,01 |
| Öldichte ??[kg/l] | 0,92 | 0,92 | 0,92 | 0,92 | 0,92 | 0,92 | 0,92 | 0,92 | 0,92 | 0,92 |
| Dichtedifferenz ???[kg/l] | 0,12 | 0,12 | 0,12 | 0,12 | 0,12 | 0,12 | 0,12 | 0,12 | 0,12 | 0,12 |
| Gehalt G an Ölphase im Getränk [g/kg] | 1,3 | 1 | 1,3 | 1 | 1,3 | 1 | 2,7 | 2 | 2,7 | 2 |
| Y [µm] | 0,54 | 0,61 | 0,78 | 0,9 | 1,01 | 1,2 | 0,61 | 0,68 | 0,85 | 0,93 |
| D97-Wert [µm] | 0,55 | 0,4 | 0,85 | 0,58 | 1,15 | 0,75 | 0,65 | 0,4 | 0,9 | 0,65 |
| Sichtdicht bei 10 mm Schichtdicke 500 ppm Öl | Ja | Nein | Ja | Ja | Ja | Ja | Ja | Nein | Ja | Ja |
| Spezifische Trübung $kg/_{g\cdot m}$ | 155 | 105 | 225 | 152 | 275 | 200 | 173 | 112 | 230 | 167 |
| 4 Wochen aufrahmstabil bei Raumtemperatur | Nein | Ja | Nein | Ja | Nein | Ja | Nein | Ja | Nein | Ja |

**Tab. 6** n.st. bedeutet nicht aufrahmstabil. kl. Tr. bedeutet unwirtschaftlich kleine Truebung.

EP 1 151 677 B1

Tab. 7

| Nicht aufrahmstabile Getränkeherstellungen | | | |
|---|---|---|---|
| Emulsionsrezeptur | A | B | E |
| **Herstell- und Ausmisch-variante** | 44 | 45 | 46 |
| **Komponente (%)** | | | |
| **Grundstoff I** Emulsion | 2,01 | 1,5 | 2,3 |
| **Grundstoff II** Aroma-Saft-Konzentrat | 1,34 | 1,4 | 1,4 |
| Süßung | 9,7 | 9,7 | 9,7 |
| Säuerung | 0,57 | 0,6 | 0,6 |
| Verdickungsmittel | - | - | - |
| Wasser | 86,38 | 86,8 | 86 |
| **Eigenschaften** | | | |
| Viskosität des Getränkes [Ns/m$^2$] | 0,0012 | 0,0012 | 0,012 |
| Öldichte r [kg/l] | 0,927 | 0,95 | 0,96 |
| Dichtedifferenz Dr [kg/l] | 0,111 | 0,0881 | 0,0781 |
| Gehalt G an Ölphase im Getränk [g/kg] | 1,809 | 1,95 | 2,275 |
| Y [μm] | 0,521 | 0,580 | 0,607 |
| D97-Wert [μm] | 0,71 | 0,82 | 0,72 |
| Sichtdicht bei 10 mm Schichtdicke 500 ppm Öl | Ja | Ja | Ja |
| Spezifische Trübung $kg/_{g \cdot m}$ | 203 | 214 | 201 |
| 4 Wochen aufrahmstabil bei Raumtemperatur | Nein | Nein | Nein |

Tab. 7 enthält Anwendungsbeispiele, die außerhalb des beanspruchten Bereiches liegen, da die erhaltenen Getränke nicht aufrahmstabil sind. Die nach der Formel mittels der Größe Y geforderte maximale D97-Wert wird bei Vergleich in Tab. 7 von den Emulsionsherstellungs- und Ausmischvarianten 44 bis 46 nicht erreicht. Y ist stets kleiner als der D97-Wert. Die Emulsion ist im Getränk nicht aufrahmstabil.

Wie Tab. 8 und 9 zeigt, kann das erfindungsgemäße Getränk auch aus einem Sirup hergestellt werden.

Tab. 8

| Getränkeherstellung über Sirup | | | | | | |
|---|---|---|---|---|---|---|
| Emulsionsrezeptur | A | B | C | D | E | VergleichsemulsionI |
| **Emulsionsherstellungs- und Ausmischvariante** | 47 | 48 | 49 | 50 | 51 | 52 |
| **Komponente (%)** | | | | | | |
| **Grundstoff I** Emulsion | 6,43 | 1,25 | 3,74 | 4,80 | 7,36 | 6,43 |
| Wasser | 55,89 | 61,15 | 58,66 | 57,26 | 54,8 | 55,92 |
| **Grundstoff II** Aroma-Saft-Konzentrat | 4,29 | 4,48 | 4,48 | 4,48 | 4,48 | 4,29 |
| Süßung | 31,04 | 31,04 | 31,04 | 31,04 | 31,04 | 31,04 |
| Säuerung | 1,824 | 1,920 | 1,920 | 1,856 | 1,920 | 1,824 |

Tab. 8 (fortgesetzt)

| Getränkeherstellung über Sirup | | | | | | |
|---|---|---|---|---|---|---|
| Emulsionsrezeptur | A | B | C | D | E | VergleichsemulsionI |
| **Komponente (%)** | | | | | | |
| Vitamine | 0,192 | 0,160 | - | 0,320 | 0,160 | 0,160 |
| Verdickungsmittel | 0,256 | - | 0,080 | 0,160 | 0,160 | 0,256 |
| Konservierungsmittel | 0,080 | - | 0,080 | 0,080 | 0,080 | 0,080 |

Tab. 9

| Getränkeherstellung | | | | | | |
|---|---|---|---|---|---|---|
| **Emulsionsherstellungs- und Ausmischvariante** | 47 | 48 | 49 | 50 | 51 | 52 |
| **Komponente (%)** | | | | | | |
| **Sirup** | 31,3 | 31,3 | 31,3 | 31,3 | 31,3 | 31,3 |
| Wasser | 68,8 | 68,8 | 68,8 | 68,8 | 68,8 | 68,8 |
| **Eigenschaften** | | | | | | |
| Viskosität des Getränkes [Ns/m$^2$] | 0,0058 | 0,0012 | 0,0021 | 0,0035 | 0,0035 | 0,0058 |
| Öldichte r [kg/l] | 0,927 | 0,95 | 0,97 | 0,95 | 0,96 | 0,927 |
| Dichtedifferenz Dr [kg/l] | 0,111 | 0,0881 | 0,0681 | 0,0881 | 0,0781 | 0,111 |
| Gehalt G an Ölphase im Getränk [g/kg] | 1,809 | 0,507 | 1,05 | 1,35 | 1,79 | 0,905 |
| Y [μm] | 0,821 | 0,899 | 0,881 | 0,786 | 0,763 | 1,058 |
| D97-Wert [μm] | 0,71 | 0,82 | 0,86 | 0,75 | 0,72 | 0,41 |
| Sichtdicht bei 10 mm Schichtdicke 500 ppm Öl | Ja | Ja | Ja | Ja | Ja | Nein |
| *Spezifische Trübung $^{kg}/_{g\cdot m}$* | *203* | *214* | *221* | *199* | *201* | *131* |
| 4 Wochen aufrahmstabil bei Raumtemperatur | Ja | Ja | Ja | Ja | Ja | ja |

**Patentansprüche**

1. Emulsionsgetränk mit einer wässrigen Phase und einer dispersen Ölpase, wobei die Viskosität η des Getränkes, gemessen bei 20°C, im Bereich von 0,001 bis 0,015 Pa·s liegt, die Dichtedifferenz $\Delta\rho=\rho_{wässrig}-\rho_{Öl}$ im Bereich von 0,12 bis 0,025 kg/l liegt und der Gehalt G an Ölphase im Getränk im Bereich von 0,35 bis 3 g/kg, bevorzugt von 0,45 bis 3 g/kg und besonders bevorzugt bei 0,55 bis 3 g/kg des Emulsionsgetränks liegt, und der d97-Wert im Bereich von 0,75 x Y bis Y liegt, wobei

$$\ln(Y) = 1,457+1,524\cdot10^1\cdot\eta-8,385\cdot10^{-1}\cdot G-1,880\cdot10^1\cdot\Delta\rho-5,025\cdot10^{-1}\cdot\eta\cdot G$$

$$-4,520\cdot10^0\cdot\Delta\rho\cdot G+8,66\cdot10^2\cdot\Delta\rho\cdot\eta+2,050\cdot10^2\cdot\eta^2+3,330\cdot10^{-1}\cdot G^2$$

$$+8,300\cdot10^0\cdot\Delta\rho^2+8,254\cdot10^1\cdot G\cdot\Delta\rho^2-4,426\cdot10^{-2}\cdot G^3+4,070\cdot10^2\cdot\Delta\rho^3$$

$$-9,937\cdot10^2\cdot\eta^3+2,730\cdot10^4\cdot\eta\cdot\Delta\rho^3-4,420\cdot10^2\cdot G\cdot\Delta\rho^3$$

$$+6,058\cdot10^4\cdot\Delta\rho\cdot\eta^3-5,821\cdot10^5\cdot\eta^2\cdot\Delta\rho^2$$

und der d97-Wert den Tropfendurchmesser in μm, bei dem 97% des Volumens der im Getränk enthaltenen dispersen Phase der Emulsion einen kleineren Tropfendurchmesser besitzen, bezeichnet.

**2.** Emulsionsgetränk nach Anspruch 1, **dadurch gekennzeichnet, dass** die Dichtedifferenz $\Delta\rho$ im Bereich von 0,09 bis 0,12 kg/l liegt.

**3.** Emulsionsgetränk nach einem der Ansprüche 1 bis 2, **dadurch gekennzeichnet, dass** die Viskosität im Bereich von 0,002 bis 0,015 Pa·s, bevorzugt zwischen 0,004 bis 0,015 Pa·s liegt.

**4.** Emulsionsgetränk nach einem der Ansprüche 1 bis 3, **dadurch gekennzeichnet, dass** das Emulsionsgetränk Beschwerungsmittel und/oder Verdickungsmittel enthält.

**5.** Emulsionsgetränk nach einem der Ansprüche 1 bis 4, **dadurch gekennzeichnet, dass** das Emulsionsgetränk Süßungsmittel wie Zucker, Süßstoffe und Zuckeralkohole enthält.

**6.** Emulsionsgetränk nach einem der Ansprüche 1 bis 5, **dadurch gekennzeichnet, dass** das Emulsionsgetränk Konservierungsmittel enthält.

**7.** Emulsionsgetränk nach einem der Ansprüche 1 bis 6, **dadurch gekennzeichnet, dass** das Emulsionsgetränk funktionelle Zutaten wie Vitamine, Mineralstoffe, Kräuterextrakte, Ballaststoffe, prebiotische Zutaten, Koffein oder Alkohol enthält.

**8.** Emulsionsgetränk nach einem der Ansprüche 1 bis 7, **dadurch gekennzeichnet, dass** es eine Emulsion mit einer spezifischen Trübung von mindestens 150 kg/g x m aufweist.

**9.** Verfahren zur Herstellung eines Emulsionsgetränkes, **dadurch gekennzeichnet, dass** eine disperse Ölphase eingebracht wird, so dass die Viskosität $\eta$ des Getränkes, gemessen bei 20°C, im Bereich von 0,001 bis 0,015 Pa·s liegt, die Dichtedifferenz $\Delta\rho=\rho_{\text{wässrig}}-\rho_{\text{Öl}}$ im Bereich von 0,12 bis 0,025 kg/l liegt und der Gehalt G an Ölphase im Getränk im Bereich von 0,35 bis 3 g/kg, bevorzugt von 0,4 bis 3 g/kg und besonders bevorzugt bei 0,55 bis 3 g/kg des Emulsionsgetränk liegt, und der d97-Wert im Bereich von 0,75 x Y bis Y liegt, wobei

$$\ln(Y) = 1{,}457+1{,}524\cdot10^{1}\cdot\eta-8{,}385\cdot10^{-1}\cdot G-1{,}880\cdot10^{1}\cdot\Delta\rho-5{,}025\cdot10^{-1}\cdot\eta\cdot G$$

$$-4{,}520\cdot10^{0}\cdot\Delta\rho\cdot G+8{,}66\cdot10^{2}\cdot\Delta\rho\cdot\eta+2{,}050\cdot10^{2}\cdot\eta^{2}+3{,}330\cdot10^{-1}\cdot G^{2}$$

$$+8{,}300\cdot10^{0}\cdot\Delta\rho^{2}+8{,}254\cdot10^{1}\cdot G\cdot\Delta\rho^{2}-4{,}426\cdot10^{-2}\cdot G^{3}+4{,}070\cdot10^{2}\cdot\Delta\rho^{3}$$

$$-9{,}937\cdot10^{2}\cdot\eta^{3}+2{,}730\cdot10^{4}\cdot\eta\cdot\Delta\rho^{3}-4{,}420\cdot10^{2}\cdot G\cdot\Delta\rho^{3}$$

$$+6{,}058\cdot10^{4}\cdot\Delta\rho\cdot\eta^{3}-5{,}821\cdot10^{5}\cdot\eta^{2}\cdot\Delta\rho^{2}$$

und der d97-Wert den Tropfendurchmesser in $\mu$m, bei dem 97% des Volumens der im Getränk enthaltenen dispersen Phase der Emulsion einen kleineren Tropfendurchmesser besitzen, bezeichnet.

**Claims**

**1.** An emulsion beverage comprising an aqueous phase and a disperse oil phase, wherein the viscosity $\eta$ of the beverage as measured at 20 °C is within a range of from 0.001 to 0.015 Pa·s, the density difference $\Delta\rho = \rho_{\text{aqueous}} - \rho_{\text{oil}}$ is within a range of from 0.12 to 0.025 kg/l, and the content G of oil phase in the beverage is within a range of from 0.35 to 3 g/kg, preferably from 0.45 to 3 g/kg, more preferably from 0.55 to 3 g/kg of the emulsion beverage, and the d97 value is within a range of from 0.75·Y to Y, wherein:

$$\ln(Y) = 1.457+1.524\cdot10^{1}\cdot\eta-8.385\cdot10^{-1}\cdot G-1.880\cdot10^{1}\cdot\Delta\rho-5.025\cdot10^{-1}\cdot\eta\cdot G$$

$$-4.520\cdot10^{0}\cdot\Delta\rho\cdot G+8.66\cdot10^{2}\cdot\Delta\rho\cdot\eta+2.050\cdot10^{2}\cdot\eta^{2}+3.330\cdot10^{-1}\cdot G^{2}$$

$$+8.300 \cdot 10^0 \cdot \Delta\rho^2 + 8.254 \cdot 10^1 \cdot G \cdot \Delta\rho^2 - 4.426 \cdot 10^{-2} \cdot G^3 + 4.070 \cdot 10^2 \cdot \Delta\rho^3$$

$$-9.937 \cdot 10^2 \cdot \eta^3 + 2.730 \cdot 10^4 \cdot \eta \cdot \Delta\rho^3 - 4.420 \cdot 10^2 \cdot G \cdot \Delta\rho^3$$

$$+ 6.058 \cdot 10^4 \cdot \Delta\rho \cdot \eta^3 - 5.821 \cdot 10^5 \cdot \eta^2 \cdot \Delta\rho^2$$

and the d97 value is the droplet diameter in $\mu$m at which 97% of the volume of the disperse phase of the emulsion contained in the beverage have a smaller droplet diameter.

2. The emulsion beverage according to claim 1, **characterized in that** the density difference $\Delta\rho$ is within a range of from 0.09 to 0.12 kg/l.

3. The emulsion beverage according to any of claims 1 to 2, **characterized in that** the viscosity is within a range of from 0.002 to 0.015 Pa·s, preferably from 0.004 to 0.015 Pa·s.

4. The emulsion beverage according to any of claims 1 to 3, **characterized in that** said emulsion beverage contains weighting agents and/or thickeners.

5. The emulsion beverage according to any of claims 1 to 4, **characterized in that** said emulsion beverage contains sweeteners, such as sugars, artificial sweetening agents and sugar alcohols.

6. The emulsion beverage according to any of claims 1 to 5, **characterized in that** said emulsion beverage contains preservatives.

7. The emulsion beverage according to any of claims 1 to 6, **characterized in that** said emulsion beverage contains functional additives, such as vitamins, minerals, herb extracts, roughage, prebiotic additives, caffeine or alcohol.

8. The emulsion beverage according to any of claims 1 to 7, **characterized by** comprising an emulsion having a specific turbidity of at least 150 kg/g·m.

9. A process for the preparation of an emulsion beverage, **characterized in that** a disperse oil phase is incorporated, so that the viscosity $\eta$ of the beverage as measured at 20 °C is within a range of from 0.001 to 0.015 Pa·s, the density difference $\Delta\rho = \rho_{aqueous} - \rho_{oil}$ is within a range of from 0.12 to 0.025 kg/l, and the content G of oil phase in the beverage is within a range of from 0.35 to 3 g/kg, preferably from 0.4 to 3 g/kg, more preferably from 0.55 to 3 g/kg of the emulsion beverage, and the d97 value is within a range of from 0.75·Y to Y, wherein:

$$\ln(Y) = 1.457 + 1.524 \cdot 10^1 \cdot \eta - 8.385 \cdot 10^{-1} \cdot G - 1.880 \cdot 10^1 \cdot \Delta\rho - 5.025 \cdot 10^{-1} \cdot \eta \cdot G$$

$$-4.520 \cdot 10^0 \cdot \Delta\rho \cdot G + 8.66 \cdot 10^2 \cdot \Delta\rho \cdot \eta + 2.050 \cdot 10^2 \cdot \eta^2 + 3.330 \cdot 10^{-1} \cdot G^2$$

$$+8.300 \cdot 10^0 \cdot \Delta\rho^2 + 8.254 \cdot 10^1 \cdot G \cdot \Delta\rho^2 - 4.426 \cdot 10^{-2} \cdot G^3 + 4.070 \cdot 10^2 \cdot \Delta\rho^3$$

$$-9.937 \cdot 10^2 \cdot \eta^3 + 2.730 \cdot 10^4 \cdot \eta \cdot \Delta\rho^3 - 4.420 \cdot 10^2 \cdot G \cdot \Delta\rho^3$$

$$+6.058 \cdot 10^4 \cdot \Delta\rho \cdot \eta^3 - 5.821 \cdot 10^5 \cdot \eta^2 \cdot \Delta\rho^2$$

and the d97 value is the droplet diameter in $\mu$m at which 97% of the volume of the disperse phase of the emulsion contained in the beverage have a smaller droplet diameter.

**Revendications**

1. Boisson en émulsion constituée d'une phase aqueuse et d'une phase huileuse dispersée, dans laquelle la viscosité $\eta$ de la boisson, mesurée à 20°C, est comprise entre 0,001 et 0,015 Pa.s, la différence de densité $\Delta\rho = \rho_{phase\ eau} - \rho_{phase\ huile}$ est comprise entre 0,12 et 0,025 kg/l, la teneur G en phase huileuse dans la boisson est comprise entre 0,35 et 3 g/kg, de préférence entre 0,45 et 3 g/kg et de manière encore plus préférée entre 0,55 et 3 g/kg de boisson en émulsion, et l'indice d97 est compris entre 0,75 x Y et Y, où

$$\ln(Y) = 1{,}457 + 1.524 . 10^1 . \eta - 8{,}385 . 10^{-1} . G - 1{,}880 . 10^1 . \Delta\rho - 5{,}025$$

$$10^{-1} . \eta . G - 4{,}520 . 10^0 . \Delta\rho . G + 8{,}66 . 10^2 . \Delta\rho . \eta + 2{,}050 . 10^2 . \eta^2 + 3{,}330 . 10^{-1} . G^2$$

$$+ 8{,}300 . 10^0 . \Delta\rho^2 + 8{,}254 . 10^1 . G . \Delta\rho^2 - 4{,}426 . 10^{-2} . G^3 + 4{,}070 . 10^2 . \Delta\rho^3$$

$$- 9{,}937 . 10^2 . \eta^3 + 2{,}730 . 10^4 . \eta . \Delta\rho^3 - 4{,}420 . 10^2 . G . \Delta\rho^3$$

$$+ 6{,}058 . 10^4 . \Delta\rho . \eta^3 - 5{,}821 . 10^5 . \eta^2 . \Delta\rho^2,$$

l'indice d97 caractérisant le diamètre des gouttes en μm tel que 97 % du volume de la phase dispersée de l'émulsion contenue dans la boisson a un diamètre de gouttes inférieur.

2. Boisson en émulsion selon la revendication 1, **caractérisée en ce que** la différence de densité $\Delta\rho$ est comprise entre 0,09 et 0,12 kg/l.

3. Boisson en émulsion selon une des revendications 1 à 2, **caractérisée en ce que** la viscosité est comprise dans une plage entre 0,002 et 0,015 Pa.s, de préférence entre 0,004 et 0,015 Pa.s.

4. Boisson en émulsion selon une des revendications 1 à 3, **caractérisée en ce que** la boisson en émulsion contient des agents de charge et/ou des agents épaississants.

5. Boisson en émulsion selon une des revendications 1 à 4, **caractérisée en ce que** la boisson en émulsion contient des agents adoucissants tels que du sucre, des substances édulcorantes et des alcools de sucre.

6. Boisson en émulsion selon une des revendications 1 à 5, **caractérisée en ce que** la boisson en émulsion contient des agents de conservation.

7. Boisson en émulsion selon une des revendications 1 à 6, **caractérisée en ce que** la boisson en émulsion contient des ingrédients fonctionnels tels que des vitamines, des substances minérales, des extraits de plantes, des diluants, des ingrédients prébiotiques, de la caféine ou de l'alcool.

8. Boisson en émulsion selon une des revendications 1 à 7, **caractérisée en ce qu'**elle comporte une émulsion ayant une turbidité spécifique d'au moins 150 kg/g x m.

9. Procédé de préparation d'une boisson à émulsion, **caractérisé en ce qu'**on introduit une phase huileuse dispersée de telle sorte que la viscosité $\eta$ de la boisson, mesurée à 20°C, soit comprise entre 0,001 et 0,015 Pa.s, la différence de densité $\Delta\rho = \rho_{\text{phase eau}} - \rho_{\text{phase huile}}$ soit comprise entre 0,12 et 0,025 kg/l, la teneur G en phase huileuse dans la boisson soit comprise entre 0,35 et 3 g/kg, de préférence entre 0,4 et 3 g/kg et de manière encore plus préférée entre 0,55 et 3 g/kg de boisson en émulsion, et l'indice d97 soit compris entre 0,75 x Y et Y, moyennant quoi

$$\ln(Y) = 1{,}457 + 1.524 . 10^1 . \eta - 8{,}385 . 10^{-1} . G - 1{,}880 . 10^1 . \Delta\rho - 5{,}025 .$$

$$10^{-1} . \eta . G - 4{,}520 . 10^0 . \Delta\rho . G + 8{,}66 . 10^2 . \Delta\rho . \eta + 2{,}050 . 10^2 . \eta^2 + 3{,}330 . 10^{-1} . G^2$$

$$+ 8{,}300 . 10^0 . \Delta\rho^2 + 8{,}254 . 10^1 . G . \Delta\rho^2 - 4{,}426 . 10^{-2} . G^3 + 4{,}070 . 10^2 . \Delta\rho^3$$

$$- 9{,}937 . 10^2 . \eta^3 + 2{,}730 . 10^4 . \eta . \Delta\rho^3 - 4{,}420 . 10^2 . G . \Delta\rho^3$$

$$+ 6{,}058 . 10^4 . \Delta\rho . \eta^3 - 5{,}821 . 10^5 . \eta^2 . \Delta\rho^2,$$

l'indice d97 caractérisant le diamètre des gouttes en μm pour lesquelles 97 % du volume de la phase dispersée de l'émulsion contenue dans la boisson a un diamètre de gouttes inférieur.